## Europäisches Patentamt
## European Patent Office
## Office européen des brevets

(11) Veröffentlichungsnummer: **0 360 152 A2**

(19)

(12) **EUROPÄISCHE PATENTANMELDUNG**

(21) Anmeldenummer: **89117008.6**

(22) Anmeldetag: **14.09.89**

(51) Int. Cl.5: **C09D 157/12 , C09D 139/00 , C04B 41/48**

(30) Priorität: **22.09.88 DE 3832262**

(43) Veröffentlichungstag der Anmeldung:
**28.03.90 Patentblatt 90/13**

(84) Benannte Vertragsstaaten:
**AT BE CH DE ES FR GB GR IT LI LU NL SE**

(71) Anmelder: **Henkel Kommanditgesellschaft auf Aktien**
**Henkelstrasse 67**
**D-4000 Düsseldorf 13(DE)**

(72) Erfinder: **Tamm, Horst**
**Ernst-Reuter-Weg 5**
**D-5657 Haan(DE)**
Erfinder: **Schieferstein, Ludwig, Dr.**
**Am Hang 15**
**D-4030 Ratingen 1(DE)**
Erfinder: **Adrian, Kurt**
**Lindenstrasse 59**
**D-5205 St. Augustin 2(DE)**
Erfinder: **Leder, Manfred, Dr.**
**Am Eichelkamp 161**
**D-4010 Hilden(DE)**

(54) **Verwendung von Aminogruppen enthaltenden Copolymeren in wässriger Zubereitung als Vorstrichmittel.**

(57) Wäßrige Vorstrichmittel, enthaltend 5 bis 30 Gew.-% Aminogruppen enthaltenden Copolymere, erhalten durch Copolymerisation von

    a) 50 bis 90 Gew.-% eines stickstofffreien Monomeren oder mehrerer mit einer olefinischen Doppelbindung und

    b) 50 bis 10 Gew.-% eines mindestens eines tertiäre Aminofunktion enthaltenden, linear polymerisierbaren Monomeren oder mehrerer und/oder Diallylamin,

wobei die Copolymeren gegebenenfalls vollständig oder teilweise neutralisiert bzw. quarterniert sind, ergeben klare Systeme mit ausgezeichneten Penetrations- und Haftvermittlungseigenschaften bei der Behandlung poröser Oberflächen, insbesondere auf Basis gips- oder zementhaltiger Massen.

EP 0 360 152 A2

## Verwendung von Aminogruppen enthaltenden Copolymeren in wäßriger Zubereitung als Vorstrichmittel.

Die Erfindung betrifft die Verwendung von Aminogruppen enthaltenden Copolymeren, erhalten durch Copolymerisation von, jeweils bezogen auf Copolymer,

a) 50 bis 90 Gew.-% eines stickstoffreien Monomeren oder mehrerer mit einer olefinischen Doppelbindung und

b) 50 bis 10 Gew.-% eines mindestens eine tertiäre Aminofunktion enthaltenden linear polymerisierbaren Monomeren oder mehrerer und/oder Diallylamin, wobei die Aminogruppen der Copolymeren gegebenenfalls vollständig oder teilweise neutralisiert bzw. quarterniert sind, in wäßriger, klarer Zubereitung als Vorstrichmittel für poröse Oberflächen, insbesondere gips- oder zementhaltige Materialoberflächen.

Vorstriche (Primer) werden eingesetzt, um Untergründe für nachfolgende Arbeiten vorzubereiten, z.B. gips- oder zementhaltige Massen enthaltene Estriche für das Aufbringen von Bodenbelägen. Sie sollen, wenn möglich, in das Untergrundmaterial eindringen und dieses imprägnieren und verfestigen. Weiterhin sollen Reste oberflächlichen Staubes gebunden werden und Haftbrücken zu nachfolgenden Spachtelungen mit zementären Spachtel- und Ausgleichsmassen gebildet werden, insbesondere für nachfolgende Klebearbeiten und Beschichtungen, z.B. mit Beschichtungsmittel auf Epoxidbasis. Nach dem Merkblatt "Beurteilen und Vorbereiten von Untergründen, Kleben von elastischen und textilen Bodenbelägen" (herausgegeben von der Technischen Kommission Bauklebstoffe des Fachverbandes der Klebstoffindustrie, November 1985) können Vorstriche Kunstkautschuklösungen oder Kunstharzlösungen in organischen Lösemitteln, zweikomponentige lösemittelhaltige Reaktionsharze, wäßrige Kunstkautschukdispersionen (sogenannte Latices) oder wäßrige Kunstharzdispersionen (Polyacrylatdispersionen, Polyvinylacetatdispersionen und dergleichen) sein.

Kunstkautschuklösungen, insbesondere auf Basis von Chloropren, haben sich vielfach als Vorstriche bewährt und ein breites Einsatzfeld gefunden. Nachteilig ist, daß Kunstkautschuklösungen als typische Filmbildner praktisch nicht in den Untergrund eindringen. Vor allem hat jedoch der hohe Gehalt an leichtentzündlichen Lösemitteln (etwa 75 %) zu zahlreichen Unfällen geführt.

Es sind deshalb Dispersionen auf Chloroprenbasis als verarbeitungsfreundliche Vorstrichmittel in den Markt eingeführt worden. Zwar wurde damit die Feuer- und Explosionsgefahr gebannt, es blieb jedoch der nachteilige, für Kunstharzprodukte typische Effekt der fehlenden Penetrationsfähigkeit; ein Imprägnierungseffekt trat nicht ein.

Lösemittelhaltige Reaktionsvorstrichmittel auf Epoxid- und Polyurethanbasis dringen infolge des niedrigen Molekulargewichts der Prepolymeren und Lösemittels tief in den Untergrund ein und ergeben außerordentlich gute Verfestigungseffekte. Auch die Haftbrückenwirkung ist gut, vor allem, wenn gleichsystemige Beschichtungen im zeitlich richtigen Rhythmus aufgebracht werden. Nachteilig sind jedoch vor allem der hohe Preis dieser Systeme; zudem handelt es sich bei den Inhaltsstoffen (Amine bzw. Isocyanate als Härter; Lösemittel) um Gefahrstoffe. Zudem kann die Formulierung als Zweikomponentensystem zu Mischfehlern Anlaß geben. Zu hohe Auftragsstärken bei nachfolgenden, nicht im System liegenden Arbeiten (z.B. bei nachfolgender Spachtelung mit zementärer Ausgleichsmasse) können Abstreuungen, z.B. mit feuergetrocknetem Sand, erfordern.

Vorstrichmittel auf Basis von in organischen Lösemitteln gelösten Kunstharzen (z.B. Polyvinylacetat, Polyacrylat) haben sich bewährt, wurden jedoch von den Herstellern vor allem wegen der hohen Lösemittelgehalte aus umwelt- und arbeitshygienischen Gründen zurückgezogen. Diese Systeme wurden durch die entsprechenden wäßrigen Dispersionen (auf Basis von Polyacrylaten, Polystyrolacrylaten und Polyvinylacetat) ersetzt, die sich inzwischen ein relativ weites Anwendungsgebiet erschlossen haben. Nachteilig ist jedoch bei diesen Systemen, daß auch sie kein Eindringvermögen besitzen. Die Dispersionen bilden selbst auf porösen Untergründen vielmehr Filme. Eine Tiefenwirkung bzw. eine Imprägnierung mit Verfestigungscharakter zeigen diese Dispersionen nicht.

Es ist weiterhin bekannt, Aminoacrylatemulsionen als Vorstrichmittel für Betonsubstrate einzusetzen, vgl. C.A. 92 (14): 112 366e (1979). Der Anteil an Aminoacrylaten in diesen Systemen ist jedoch so gering, daß nur wäßrige Dispersionen, nicht jedoch klare wäßrige Zubereitungen bzw. Lösungen erhalten werden können. Demgemäß weisen diese Dispersionen kein Eindringvermögen auf und sind ähnlich wie die in dem Markt vorhandenen Dispersionsvorstriche zwar gute Haftvermittler, jedoch keine Imprägniermittel.

Wie bereits ausgeführt wurde, ist jedoch bei vielen Untergründen gerade eine Imprägnierung durch Eindringen des Vorstrichmittels in die Struktur der zu behandelnden Oberflächen erforderlich. Eine gute Bindung z.B. zwischen Fußbodenbelag und Klebstoff oder die gute innere Festigkeit einer Kunststoffbeschichtung soll nicht unvermittelt in den starren, unelastischen, anorganischen Untergrund übergehen. Möglicherweise ist dieser Untergrund noch oberflächenmürbe. Selbst nach Entfernung der obersten Schicht durch Schleifen oder Fräsen und Absaugen des Staubes mittels kräftiger Staubsauger hat es sich. als notwendig erwiesen, tiefwirkende Vorstrichmittel einzusetzen, da sonst z.B. Fußbodenbeläge zusammen mit der oberen Estrichrandzone bei Belastung leicht abgelöst werden können. Die obengenannten lösemittelhaltigen zweikomponentigen Reaktionsprodukte haben sich daher trotz der mit Ihnen verbundenen arbeitshygienischen Probleme und trotz der bereits am Markt vorhandenen wäßrigen Dispersion als unersetzlich erwiesen.

Die Erfindung ist auf wäßrige Vorstrichmittel gerichtet, die im wesentlichen frei von physiologisch bedenklichen organischen Lösemitteln und Gefahrstoffen sind, und die die geforderte Tiefenwirkung, insbesondere für poröse Oberflächen, sowie die von Vorstrichmitteln zu fordernde Haftvermittlung aufweisen. Diese Aufgabe wird erfindungsgemäß durch die Verwendung der eingangs genannten Polymeren gelöst. Die Vorstrichmittel der Erfindung eignen sich insbesondere zur Vorbereitung von gips- oder zementhaltigen Estrichen für das Aufbringen von Kunststoffbeschichtungen oder Klebemitteln für Bodenbeläge.

Die erfindungsgemäß zu verwendenden, Aminogruppen enthaltenden Copolymere sind als solche als Überzugsmaterial für Tabletten aus der DE-A 2 135 073, auf deren Inhalt Bezug genommen wird, bekannt.

Als erfindungsgemäß einzusetzende stickstofffreie Monomere für die Herstellung der Aminogruppen enthaltenden Copolymere können insbesondere die folgenden genannt werden:

alpha, beta-ungesättigte Mono- und Dicarbonsäuren, insbesondere Acrylsäure, Methacrylsäure, Crotonsäure, Itakonsäure, Maleinsäure und Fumarsäure einschließlich Estern derselben, z.B. Acrylsäurealkylester, Methacrylsäurealkylester, Hydroxyethylacrylat und -methacrylat, beta-Hydroxypropylacrylat und -methacrylat, beta-Hydroxybutylacrylat und -methacrylat, gamma-Hydroxybutylacrylat und -methacrylat, Glycerinmonoacrylat und -methacrylat, Ethylenglykolmonoacrylat und -methacrylat; weiterhin Vinylester, insbesondere Vinylacetat, und Vinylether sowie Styrol (gegebenenfalls in Mischung mit Butadien), alpha-Methylstyrol, Vinyltoluol und dergleichen. Bevorzugte stickstofffreie Monomere sind Ester der Acryl- bzw. Methacrylsäure mit $C_1$-$C_4$-Monoalkanolen, z.B. die Methyl-, Ethyl-, Propyl- und Butylester, gegebenenfalls im Gemisch mit Acryl- und/oder Methacrylsäure. Die vorgenannten Monomeren können einzeln oder in Mischung eingesetzt werden. Besonders bevorzugt sind Copolymere der vorstehend genannten Art, bei denen die stickstofffreien Monomere Ester der Arylsäure mit $C_1$-$C_4$-Monoalkanolen, z.B. Methanol, Ethanol, Propanol oder Butanol, sind.

Die erfindungsgemäß einzusetzenden, mindestens eine tertiäre Aminofunktion enthaltenden linear polymerisierbaren Monomeren sind dem Polymerfachmann geläufig. Typische Vertreter sind Dialkylaminoalkylester der Acryl-, Metacryl-, Malein-, Itakon- und Fumarsäure sowie Diallylamin. Auch die entsprechenden Dialkylaminoalkylamide der genannten Säuren, z.B. Dimethylaminopropylmethacrylamid, können eingesetzt werden.

Besonders bevorzugt sind Ester der Acryl- bzw. Methacrylsäure mit insbesondere eine tertiäre Aminofunktion aufweisenden $C_2$-$C_6$-Monoalkanolen wie Dimethylaminoethylacrylat und -methacrylat, Diethylaminoethylacrylat und -methacrylat, Dipropylaminoethylacrylat und -methacrylat, Dibutylaminoethylacrylat und -methacrylat, 2-(Dimethylamino)propylacrylat und -methacrylat, 2-(Diethylamino)butylacrylat und -methacrylat, Dimethylaminoneopentylacrylat und -methacrylat und dergleichen. Die vorgenannten Monomeren können einzeln oder in Mischung eingesetzt werden.

Im Falle kleinerer Gewichtsmengen, z.B. weniger als 20 Gew.-%, an mindestens eine tertiäre Aminofunktion enthaltenden linear polymerisierbaren Monomeren wird der Fachmann, um klare Zubereitungen zu erhalten, die stickstofffreien Monomeren so auswählen, daß sie mindestens teilweise wasserlöslich sind. Ein mindestens teilweise wasserlösliches Comonomeres ist beispielsweise der Methylester der Acrylsäure (Methylacrylat), der im Rahmen der Erfindung besonders vorteilhaft ist.

Gemäß einer weiteren vorteilhaften Ausführungsform der Erfindung sind die Aminogruppen enthaltenden Copolymere aus 90 bis 50, insbesondere 80 bis 60 Gew.-% Methylacrylat und 10 bis 50, insbesondere 20 bis 40 Gew.-% Estern der Acryl- und/oder Methacrylsäure mit eine tertiäre Aminofunktion aufweisenden $C_2$-$C_6$-Alkanolen hergestellt. Bevorzugt ist, wenn die tertiäre Aminofunktion hier eine Dimethylamino- oder Diethylaminogruppe ist.

Gemäß einer weiteren vorteilhaften Ausführungsform der Erfindung weisen die Aminogruppen enthaltenden Copolymere Glasübergangstemperaturen (Tg) von -20 bis +30 C auf. Die Einstellung einer entsprechenden Glasübergangstemperatur durch Auswahl geeigneter Comonomerzusammensetzungen und/oder Polymerisationsbedingungen ist eine dem Polymerfachmann geläufige Maßnahme.

Gemäß einer weiteren vorteilhaften Ausführungsform der Erfindung enthalten die wäßrigen Zubereitungen die Aminogruppen enthaltenden Copolymere in einer Menge von 5 bis 30, insbesondere 8 bis 15 Gew.-%, bezogen auf Gesamtgewicht der Zubereitung.

Gemäß einer weiteren vorteilhaften Ausführungsform der Erfindung enthalten die wäßrigen Zubereitungen 1 bis 10, bevorzugt 2 bis 5 Gew.-% eines physiologisch unbedenklichen $C_2$-$C_4$-Monoalkanols, z.B. Ethanol, Propanol und/oder Butanol, vorzugsweise Isopropanol, wodurch das Eindringvermögen der wässrigen Vorstrichmittel der Erfindung zusätzlich verbessert wird; bevorzugt weisen die wäßrigen Zubereitungen pH-Werte im Bereich von 4,0 bis 7,0 auf.

Ein weiterer Vorteil der erfindungsgemäß zu verwendenden Copolymere ist dadurch begründet, daß die sie enthaltenden wäßrigen Zubereitungen klar sind, d.h. wie klare Lösungen erscheinen, wobei eine geringe Restopaleszenz in Kauf genommen werden kann. Die wäßrigen Zubereitungen liegen dabei als Lösungen oder als dem Lösungszustand sehr nahekommende feinstteilige Dispersionen vor. Diese klaren Zubereitungen können erhalten werden, in dem man einer wäßrigen Dispersion der Copolymeren soviel einer Säure zusetzt und dabei die Copolymeren neutralisiert bzw. die Aminogruppen derselben neutralisiert, bis sich gerade eine klare Zubereitung ergibt. Die Menge der hierzu erforderlichen Säure hängt von der Art und der Zusammensetzung des Copolymeren ab. Die klare Phase stellt sich im allgemeinen bereits dann ein, wenn nur ein Teil der Aminofunktionen neutralisiert ist; es ist selbstverständlich jedoch auch möglich, sämtliche Aminofunktionen zu neutralisieren.

Für die Neutralisation eignen sich die üblichen, physiologisch unbedenklichen, anorganischen und/oder organischen Säuren wie Schwefelsäure, Salzsäure, Phosphorsäure, Ameisensäure, Essigsäure und dergleichen. Besonders bevorzugt sind Phosphorsäure, Ameisensäure und/oder Essigsäure.

Anstelle der hier bevorzugten Neutralisation mit Säuren kann man auch die Aminogruppen der Copolymere zum Erhalt klarer, wäßriger Zubereitungen mit üblichen Alkylierungsmitteln, insbesondere Methyljodid, quarternieren.

Die Erfindung ist weiterhin auf wäßrige Vorstrichmittel gerichtet, die 5 bis 30, insbesondere 8 bis 15 Gew.-%, bezogen auf Klebstoffgesamtgewicht, Aminogruppen enthaltende Copolymere, erhalten durch Copolymerisation, jeweils bezogen auf Copolymere, von

a) 50 bis 90 Gew.-% eines stickstofffreien Monomeren oder mehrerer mit einer olefinischen Doppelbindung und

b) 50 bis 10 Gew.-% eines mindestens eine tertiäre Aminofunktion enthaltenden linear polymerisierbaren Monomeren oder mehrerer und/oder Diallylamin, wobei die Aminogruppen der Copolymeren bis zum Erreichen einer klaren Zubereitung gegebenenfalls vollständig oder teilweise neutralisiert bzw. quarterniert sind, erhalten.

Bevorzugte Merkmale der wäßrigen Vorstrichmittel der Erfindung sind bereits weiter oben erläutert worden.

Für die Vorstrichmittel der Erfindung kann es erwünscht sein, eine möglichst geringe Viskosität einzustellen. Dem Fachmann stehen hierzu mehrere Möglichkeiten zur Verfügung. So kann man z.B. beim Aufbau der Copolymeren geringe Mengen an Reglern zusetzen. Geeignete Regler sind Thioglykolsäure oder Mercaptoethanol. Der Anteil der Regler sollte 2% nicht übersteigen. In vielen Fällen sind Zusätze von 0,5 oder 0,1 % und manchmal sogar noch geringere Mengen zur Verringerung der Viskosität ausreichend. Es ist lediglich zu beachten, daß erhöhte Mengen an Reglern die Klebekraft beeinträchtigen können; der jeweils günstigste Anteil an Reglern läßt sich jedoch durch den Fachmann durch einfache Versuche ermitteln.

Die wäßrigen Vorstrichmittel der Erfindung können weiterhin übliche Zusätze wie Konservierungsmittel, Farbstoffe, Riechstoffe und dergleichen enthalten.

Die Herstellung der wäßrigen Vorstrichmittel der Erfindung kann mittels an sich bekannter Methoden erfolgen. Es ist lediglich darauf zu achten, daß das Molekulargewicht der Copolymeren 15.000, vorzugsweise 30.000, nicht unterschreitet, da sonst die Klebeeigenschaften beeinträchtigt werden könnten.

Die Herstellung der wäßrigen Vorstrichmittel der Erfindung erfolgt beispielsweise durch Polymerisation in wäßrigen Lösung vor oder nach der Zugabe des Neutralisations- oder Quarternierungsmittels. Sollten die Comonomeren der wäßrigen Monomerlösung nicht löslich sein, so kann auch nach Art einer Fällungspolymerisation in einem Nichtlösungsmittel gearbeitet werden; das durch Fällungspolymerisation gewonnene Material kann anschließend in wäßriger Lösung, die das Neutralisations-oder Quarternierungsmittel enthalten kann, gelöst werden. Neutralisations- oder Quarternierungsmittel können bei der Polymerisation in wäßriger Lösung von Anfang an zugegeben sein, sie können jedoch auch erst zum Ende der Polymerisation zugegeben werden.

Bei einem hohen Gehalt an nicht wasserlöslichen Comonomeren kann darüber hinaus auch eine Emulsionspolymerisation durchgeführt werden, wobei dann anschließend durch Neutralisation bzw. Quarternierung die wäßrigen Vorstrichmittel hergestellt werden. Bei der Emulsionspolymerisation kann es zweckmäßig sein, Substanzen zuzusetzen, der zu einer Verringerung der Viskosität führen. Im übrigen können auch Molekulargewichtsregler zugegeben werden, um ein zu hohes Molekulargewicht, z.B. von mehr als 1.000.000, zu verhindern.

Die Erfindung wird im folgenden anhand bevorzugter Ausführungsbeispiele näher erläutert.

Beispiel 1.

Es wurde eine wäßrige Vorstrichmittelzubereitung mit einem Copolymer, bestehend aus 35 Gew.-% Dimethylaminoethylmethacrylat (DMAEM), 25 Gew.-% Methylmethacrylat (MMA), 20 Gew.-% Butylacrylat (BUA)' und 20 Gew.-% Ethylacrylat (EA) (Glasübergangstemperatur: ca. 0°C), gemäß der folgenden Rezeptur hergestellt:

| Vorlagelösung. | |
|---|---|
| 21,4 Gew.-Teile | Wasser |
| 0,1 Gew.-Teile | Katalysator (2,2'-Azobis(2-amidinopropan)-dihydrochlorid) |
| Zulauflösung 1. | |
| 9,5 Gew.-Teile | Dimethylaminoethylmethacrylat |
| 6,8 Gew.-Teile | Methylmethacrylat |
| 5,4 Gew.-Teile | Butylacrylat |
| 5,4 Gew.-Teile | Ethylacrylat |
| Zulauflösung 2. | |
| 0,13 Gew.-Teile | Katalysator (wie oben) |
| 3,7 Gew.-Teile | Wasser |
| Verdünnungslösung. | |
| 21,4 Gew.-Teile | Wasser |
| Neutralisationslösung. | |
| 23,1 Gew.-Teile | Wasser |
| 1 Gew.-Teil | Ameisensäure, 85%-ig |
| 2,1 Gew.-Teile | Phosphorsäure, 85%-ig |
| ca. 100 Gew.-Teile ca. 30%-ige wässrige Polymerlösung. | |

Die Herstellung erfolgte in einem Reaktionsgefäß mit Rührer, Heizung, Kühlung, Rückflußkühler, Temperaturmessung und zwei Zulaufgefäßen. Dabei wurde zunächst im Reaktionsgefäß die Vorlagelösung aus Wasser und Katalysator hergestellt. Die Zulauflösungen 1 bzw. 2 wurden in die getrennten Zulaufgefäße gegeben. Die Vorlagelösung wurde unter Rühren auf 80°C erwärmt. Anschließend wurden beide Zulauflösungen innerhalb von 180 min parallel zugegeben, wobei die Temperatur bis 86°C anstieg. Nach beendetem Zulauf wurde das Reaktionsgemisch 60 min bei 80°C gerührt. Die Dispersion wurde anschließend mit Wasser verdünnt und mit der Neutralisationslösung in eine klare Zubereitung überführt (Neutralisationsgrad: 65%).

Das Reaktionsprodukt wurde in Form einer fast klaren bis leicht opaken, schwach gelblichen Lösung und einer Brookfield-Viskosität von mehr als 6000 mPas(Spindel 5, 20Upm) erhalten; der Trockenrückstand betrug 29,5 ± 0,5%. Das Reaktionsprodukt erwies sich nach dem Verdünnen auf einen Copolymerengehalt von ca. 12 Gew.-% und Hinzufügen von 3 Gew.-%, bezogen auf das Gesamtgewicht der Lösung, Isopropanol als wirksames Vorstrichmittel für Gips- und Zementestriche und zeigte ein gutes Penetrationsvermögen.

Beispiele 2 und 3.

In der in Beispiel 1 beschriebenen Weise wurden wäßrige Vorstrichmittel mit den im folgenden angegebenen Zusammensetzungen der Copolymeren hergestellt:
35 Gew.-% Dimethylaminoethylmethacrylat, 29 Gew.-% Butylacrylat, 36 Gew.-% Ethylmethacrylat (Tg: ca. 0°C).

5

30 Gew.-% Dimethylaminoethylmethacrylat, 60 Gew.-% Ethylacrylat, 10 Gew.-% Methacrylsäure (Tg: ca. -5 °C).

Auch diese Vorstrichmittel ergaben nach dem Säurezusatz sowie nach dem Verdünnen auf einen Copolymerengehalt von ca. 12 Gew.-% unter Hinzufügen von 3 Gew.-%, bezogen auf das Gesamtgewicht der Lösung, Isopropanol ausgezeichnete Penetrationswerte bei Gips- und Zementestrichen.


Beispiel 4

Es wurde eine wässrige Vorstrichmittelzubereitung mit einem Copolymer, bestehend aus 80 Gew.-% Methylacrylat und 20 Gew.-% Dimethylaminoethylmethacrylat, gemäß der folgenden Rezeptur hergestellt.


Rezeptur:


Vorlagelösung

62,7 Gew.-Teile demineralisiertes Wasser
0,2 Gew.-Teile 2,2′-Azobis(2-amidinopropan)-dihydrochlorid.

Zulauflösung 1.

5,8 Gew.-Teile Dimethylaminoethylmethacrylat
22,9 Gew.-Teile Methylacrylat.

Zulauflösung 2.

0,15 Gew.-Teile 2,2′-Azobis(2-amidinopropan)-dihydrochlorid
4,1 Gew.-Teile demineralisiertes Wasser.

Neutralisatorsäure.

4,1 Gew.-Teile 30 %-ige Schwefelsäure.

Die vorgenannte Rezeptur ergibt 100,0 Gew.-Teile einer ca. 30 %-igen wäßrigen Polymerlösung.
Die Herstellung erfolgte zunächst in einem Reaktionsgefäß mit Rührsystem, Heizung, Kühlung, Rückflußkühler, Temperaturmessung und zwei Zulaufgefäßen.


Durchführung:

Dabei wurde zunächst das Wasser in dem Reaktionsgefäß auf 80 °C erhitzt, anschließend wurde der Katalysator zugesetzt. In die beiden getrennten Zulaufgefäße wurden die Zulauflösungen 1 bzw. 2 eingefüllt. Innerhalb von 3 Stunden wurden beide Zulauflösungen parallel zugegeben, wobei die Reaktionstemperatur zwischen 80 und 85 °C gehalten wurde. Nach beendetem Zulauf wurde die Mischung 60 min bei 80 °C gerührt. Anschließend wurde der Reaktorinhalt auf unterhalb 45 °C abgekühlt und durch Zugabe der Neutralisatorlösung innerhalb etwa 30 min auf einen pH-Wert von ca. 4,5 gebracht.


Eigenschaften des Reaktionsproduktes:

Klare, schwach gelbliche Lösung
Trockenrückstand: 30,0 ± 0,5 % (nach dem Trocknen bei 60 bis 80 °C im Ölpumpenvakuum)
Brookfield-Viskosität: (gemessen bei 25 °C mit Spindel 5 bei 20 UpM) 20000 - 50000 mPas
pH-Wert: 4,5 ± 0,2.


b) Herstellung des Vorstrichmittels


6

38,5 Gew.-Teile der obigen Polymerlösung wurden mit 58,5 Gew.-Teilen demineralisiertem Wasser und 3 Gew.-Teilen Isopropanol verdünnt.

Vergleichsbeispiel.

Das wässrige Vorstrichmittel gemäß Beispiel 4 wurde mit den folgenden, handelsüblichen Vorstrichmitteln A und B verglichen:

| Vorstrichmittel A: | . |
|---|---|
| Styrol-Acrylat-Dispersion mit einem Festkörpergehalt von 50 %, einer durchschnittlichen Teilchengröße von 0,1 μ und einer Mindestfilmbildungstemperatur von 20° C | 40 Gew.-Teile |
| Diethylenglykol | 3 Gew.-Teile |
| handelsübliches Konservierungsmittel auf Benzisothiazolin-2-on-Basis | 0,1 Gew.-Teile |
| handelsüblicher Entschäumer auf Basis von Fettsäureestern und aliphatischen Kohlenwasserstoffen | 0,1 Gew.-Teile |
| Wasser | 55,8 Gew.-Teile |

Dieses Vorstrichmittel wies die folgenden Spezifikationen auf:

| Festkörpergehalt: | 20 % |
|---|---|
| pH-Wert: | 7,2 |
| Viskosität, gemessen bei 20° C: Auslaufbecher: | 12 sec. nach DIN 53 211; 4 mm Düse. |

Das Vorstrichmittel lag in Form einer weißen, undurchsichtigen Dispersion (Emulsion) vor.

Vorstrichmittel B:

Es handelt sich um einen handelsüblichen Vorstrich auf der Basis von Epoxidharz/Polyamid.

| Harzkomponente: | |
|---|---|
| In Toluol/Xylol/Ethylacetat gelöstes festes Epoxidharz mit einem Epoxidwert von 0,200 bis 0,225, einem Erweichungspunkt (R. + B.) von 64 bis 74° C und einer Dichte von 1,19 | 22,5 % |
| Xylol | 7,5 % |
| Toluol | 17,0 % |
| Ethylacetat | 53,0 %. |

| Härterkomponente: | |
|---|---|
| In Xylol/Butanol/Toluol/Ethanol gelöstes Polyaminoamidaddukt mit einer Aminzahl von 125 bis 140 | 15,0 % |
| Xylol | 8,0 % |
| Butanol | 2,0 % |
| Toluol | 16,5 % |
| Ethanol | 58,5 %. |

Das Vorstrichmittel B wies die folgenden Spezifikationen auf:

| | Harzkomponente | Härterkomponente |
|---|---|---|
| Festkörper | 22,50 % | 15,00 % |
| spez. Gewicht | 0,95 % | 0,85 % |
| Viskosität gemessen bei 20° C nach DIN 53 211 | 10 - 11 sec. | 11 - 12 sec. |
| Auslaufbecher: | | |
| 4 mm-Düse | | |

Von den obengenannten Vorstrichmitteln wurden die Haftzugwerte von Spachtelungen auf Zement- und Anhydritestrichen bestimmt und mit denjenigen des Beispiels 4 der Erfindung verglichen. Die Vorstriche wurden mit der Rolle auf einen Zement- und einen Anhydritestrich aufgetragen. Die Untergrunde hatten folgende Eigenschaften:

Zementestrich: Handelübliche Gehwegplatte, hergestellt aus Portlandzement, Quarzsand der Körnung 0 bis 8 mm und Wasser.

Anhydritestrich: Baustellenüblicher Anhydritestrich, hergestellt aus Anhydritbinder AB 20, Quarzsand der Körnung 0 bis 8 mm und Wasser.

Nach dem Auftrag der Vorstriche wurde nach einer Wartezeit von 24 Stunden mit einer zementären Ausgleichsmasse gespachtelt. Nach weiteren 24 Stunden Wartezeit wurden Haftzugstempel aus Stahl mit einem Zweikomponenten-Epoxidharzklebstoff auf der Spachtelschicht verklebt.

Die Bestimmung der Haftzugwerte erfolgte mit einer elektronischen Ausführung des Hilti-Testers 4 (Hersteller: Hottingen/Baldwin-Meßtechnik).

Nach 24 Stunden wurden die folgenden Haftzugwerte ermittelt:

| | Beispiel 4 | A | B |
|---|---|---|---|
| Zementestrich | 3,70 N/mm² | 2,54 N/mm² | 3,21 N/mm² |
| Anhydritestrich | 3,10 N/mm² | 2,81 N/mm² | 3,54 N/mm² |

Man erkennt, daß mit dem Vorstrichmittel der Erfindung ähnlich gute Haftzugwerte wie mit dem lösemittelhaltigen Zweikomponentenprodukt B und bessere als mit der milchigen Vorstrichemulsion A erhalten werden.

## Ansprüche

1. Verwendung von Aminogruppen enthaltenden Copolymeren, erhalten durch Copolymerisation von, jeweils bezogen auf Copolymer,
a) 50 bis 90 Gew.-% eines stickstofffreien Monomeren oder mehrerer mit einer olefinischen Doppelbindung und

b) 50 bis 10 Gew.-% eines mindestens eine tertiäre Aminofunktion enthaltenden, linear polymerisierbaren Monomeren oder mehrerer und/oder Diallylamin,
wobei die Aminogruppen der Copolymeren gegebenenfalls vollständig oder teilweise neutralisiert bzw. quarterniert sind, in wäßriger, klarer Zubereitung als Vorstrichmittel für poröse Oberflächen, insbesondere gips- oder zementhaltige Materialoberflächen.

2. Verwendung nach Anspruch 1, dadurch gekennzeichnet, daß die stickstofffreien Monomere Ester der Acryl- bzw. Methacrylsäure mit $C_1$-$C_4$-Monoalkanolen, gegebenenfalls im Gemisch mit Acryl- und/oder Methacrylsäure, sind.

3. Verwendung nach Anspruch 1 oder 2, dadurch gekennzeichnet, daß die stickstofffreien Monomere Ester der Acrylsäure mit $C_1$-$C_4$-Monoalkanolen sind.

4. Verwendung nach mindestens einem der Ansprüche 1 bis 3, dadurch gekennzeichnet, daß die Aminogruppen enthaltenden Monomere Ester der Acryl- bzw. Methacrylsäure mit tertiäre Aminofunktionen aufweisenden $C_2$-$C_6$-Monoalkanolen sind.

5. Verwendung nach mindestens einem der Ansprüche 1 bis 4, dadurch gekennzeichnet, daß die Copolymeren aus 90 bis 50, insbesondere 80 bis 60 Gew.-% Methylacrylat und 10 bis 50, insbesondere 20 bis 40 Gew.-% Estern der Acryl- und/oder Methacrylsäure mit eine tertiäre Aminofunktion ausweisenden $C_2$-$C_6$-Alkanolen hergestellt sind.

6. Verwendung nach mindestens einem der Ansprüche 1 bis 5, dadurch gekennzeichnet, daß die Aminogruppen enthaltenden Copolymere Glasübergangstemperaturen von -20° C bis + 30° C aufweisen.

7. Verwendung nach mindestens einem der Ansprüche 1 bis 6, dadurch gekennzeichnet, daß die wäßrigen Zubereitungen die Aminogruppen enthaltenden Copolymere in einer Menge von 5 bis 30, insbesondere 8 bis 15 Gew.-%, bezogen auf Gesamtgewicht der Zubereitung, enthalten.

8. Verwendung nach mindestens einem der Ansprüche 1 bis 7, dadurch gekennzeichnet, daß die wäßrigen Zubereitungen 1 bis 10, insbesondere 2 bis 5 Gew.-% eines $C_2$-$C_4$-Monoalkanols enthalten.

9. Verwendung nach mindestens einem der Ansprüche 1 bis 8, dadurch gekennzeichnet, daß die wäßrigen Zubereitungen pH-Werte im Bereich von 4,0 bis 7,0 aufweisen.

10. Verwendung nach mindestens einem der Ansprüche 1 bis 9, dadurch gekennzeichnet, daß die Aminogruppen der Copolymere bis zum Erreichen einer klaren Zubereitung in Wasser neutralisiert bzw. quarterniert sind.

11. Wäßrige Vorstrichmittel, enthaltend 5 bis 30 Gew.-%, bezogen auf Vorstrichmittelgesamtgewicht, Aminogruppen enthaltenden Copolymere, erhalten durch Copolymerisation von, jeweils bezogen auf Copolymer,
a) 60 bis 90 Gew.-% eines stickstofffreien Monomeren oder mehrerer mit einer olefinischen Doppelbindung und
b) 40 bis 10 Gew.-% eines mindestens eine tertiäre Aminofunktion enthaltenden, linear polymerisierbaren Monomeren oder mehrerer und/oder Diallylamin,
wobei die Copolymeren bis zum Erreichen einer klaren Zubereitung neutralisiert bzw. quarterniert sind.

12. Vorstrichmittel nach Anspruch 11, dadurch gekennzeichnet, daß die stickstofffreien Monomeren Ester der Acryl- bzw. Methacrylsäure mit $C_1$-$C_4$-Monoalkanolen, gegebenenfalls im Gemisch mit Acryl- und/oder Methacrylsäure, sind.

13. Vorstrichmittel nach Anspruch 11 oder 12, dadurch gekennzeichnet, daß die stickstofffreien Monomere Ester der Acrylsäure mit $C_1$-$C_4$-Monoalkanolen sind.

14. Vorstrichmittel nach mindestens einem der Ansprüche 11 bis 13, dadurch gekennzeichnet, daß die Aminogruppen enthaltenden Monomere Ester der Acryl- bzw. Methacrylsäure mit tertiäre Aminofunktionen aufweisenden $C_2$-$C_6$-Monoalkanolen sind.

15. Verwendung nach mindestens einem der Ansprüche 11 bis 14, dadurch gekennzeichnet, daß die Copolymeren aus 90 bis 50, insbesondere 80 bis 60 Gew.-% Methylacrylat und 10 bis 50, insbesondere 20 bis 40 Gew.-% Estern der Acryl- und/oder Methacrylsäure mit eine tertiäre Aminofunktion aufweisenden $C_2$-$C_6$-Alkanolen hergestellt sind.

16. Vorstrichmittel nach mindestens einem der Ansprüche 11 bis 15, dadurch gekennzeichnet, daß die Aminogruppen enthaltenden Copolymeren Glasübergangstemperaturen von -20° C bis + 30° C aufweisen.

17. Vorstrichmittel nach mindestens einem der Ansprüche 11 bis 16, dadurch gekennzeichnet, daß die wäßrigen Zubereitungen die Aminogruppen enthaltenden Copolymere in einer Menge von 8 bis 15 Gew.-%, bezogen auf Gesamtgewicht der Zubereitung, enthalten.

18. Vorstrichmittel nach mindestens einem der Ansprüche 11 bis 17, dadurch gekennzeichnet, daß die wäßrigen Zubereitungen 1 bis 10, insbesondere 2 bis 5 Gew.-% eines $C_2$-$C_4$-Monoalkanols enthalten.

19. Vorstrichmittel nach mindestens einem der Ansprüche 11 bis 18, dadurch gekennzeichnet, daß die wäßrigen Zubereitungen pH-Werte im Bereich von 4,0 bis 7,0 aufweisen.

9

20. Vorstrichmittel nach mindestens einem der Ansprüche 11 bis 19, dadurch gekennzeichnet, daß die Aminogruppen der Copolymere bis zum Erreichen einer klaren Zubereitung in Wasser neutralisiert bzw. quarterniert sind.